# EUROPÄISCHE PATENTSCHRIFT

(11) **EP 1 531 277 B1**
(45) Veröffentlichungstag und Bekanntmachung des Hinweises auf die Patenterteilung: **24.09.2008**
(21) Anmeldenummer: 04023541.8
(22) Anmeldetag: 02.10.2004
(51) Int. Cl.: F16C 7/02, F02B 75/32, F16F 15/32

(54) **Tarierbare Pleuelstange**
Connecting rod bosses
Tarage d'une Bielle

(30) Priorität: 13.11.2003 DE 10353503
(43) Veröffentlichungstag der Anmeldung: 18.05.2005
(73) Patentinhaber: Bayerische Motoren Werke Aktiengesellschaft, 80809 München (DE)
(72) Erfinder: Huettner, Thomas, 86949 Windach (DE); Pollack, Jens, 81241 München (DE)

(56) Entgegenhaltungen:
- DE-A1- 4 143 320
- DE-C1- 4 123 519
- US-A- 1 905 925

## Beschreibung

Die vorliegende Erfindung betrifft eine tarierbare Pleuelstange für insbesondere Brennkraftmaschinen nach dem Oberbegriff des Anspruchs 1.

Die erfindungsgemäße Pleuelstange dient der Zünddruckkraftübertragung vom Kolben auf die Kurbelwelle der Brennkraftmaschine. Bei einer mehrzylindrigen Brennkraftmaschine kommt eine der Zylinderzahl der Brennkraftmaschine entsprechende Zahl von Pleuelstangen zum Einsatz. Weisen diese Pleuelstangen nunmehr deutlich unterschiedliche Massen auf, so führt dies zu unerwünscht unruhigem Lauf der Brennkraftmaschine.

Zum Erreichen des Sollgewichts für die fertig bearbeitete Pleuelstange finden sich am großen Pleuelauge und hier insbesondere am Pleueldeckel mechanisch bearbeitbare Nocken, die im Nachfolgenden als Tariermasse bezeichnet werden und die während der mechanischen Bearbeitung der Pleuelstange so weit abgefräst werden, dass das Sollgewicht exakt erreicht wird. Die US-A-1 905 925 zeigt bereits eine bekannte Pleuelstange gemäß dem Oberbegriff des Anspruchs 1.

Diese Tariermasse befindet sich üblicherweise am Pleueldeckel und wird bei der mechanischen Bearbeitung geradlinig abgefräst, so dass sich eine bearbeitete Fläche ergibt, die im Gegensatz zu der Aufnahmefläche im großen Pleuelauge für den Kurbelwellenhubzapfen keine bzw. eine unendliche Krümmung besitzt.

Es hat sich nun gezeigt, dass es bei Verbrennungsmotoren zu einem ungleichmäßigen Verschleißbild in der Pleuellagergleitschicht kommen kann.

Wenn ein Verbrennungsmotor ohne Zünddruck betrieben wird, was beispielsweise bei aktivierter Schubabschaltung im Schiebebetrieb oder im oberen Totpunkt beim Gaswechsel des Motors der Fall ist, dann führt die Masse des Kolbens und die der Pleuelstange selbst zu einer Zugbelastung des Pleuelschafts, der beispielsweise mittels Dehnschrauben mit dem Pleueldeckel verschraubt ist, so dass sich im Bereich des Pleueldeckels als Reaktion Druckkräfte aufbauen, die in der Pleuellagergleitschicht bzw. im Pleueldeckel zu hohen Flächenpressungen führen.

Weist nun die Pleuelstange bzw. der Pleueldeckel in diesem druckbelasteten Bereich Steifigkeitssprünge auf, so führt dies zu hohen Gradienten in der Flächenpressung und somit zu lokalem und im Vergleich mit der Umgebung höherem Verschleiß in der Pleuellagergleitschicht.

Es hat sich nun gezeigt, dass ein bekanntes Pleuel mit eben abgefräster Tariermasse beim Übergang von der Tariermasse zum Zuggurt und vom Zuggurt zu den sogenannten Schraubenpfeifen Steifigkeitssprünge besitzt.

Der vorliegenden Erfindung liegt nunmehr die Aufgabe zugrunde, eine tarierbare Pleuelstange zu schaffen, die insbesondere im Bereich des Pleueldeckels eine möglichst homogene Steifigkeit besitzt und die zu einer möglichst gleichmäßigen Druckverteilung in der Pleuellagergleitschicht führt.

Die Erfindung weist zur Lösung dieser Aufgabe die im Anspruch 1 angegebenen Merkmale auf. Vorteilhafte Ausgestaltungen hiervon sind in den weiteren Ansprüchen beschrieben.

Die Erfindung schafft nunmehr eine tarierbare Pleuelstange für insbesondere Brennkraftmaschinen, mit einem kleinen Pleuelauge, einem Pleuelschaft und einem geteilten großen Pleuelauge, das mittels eines mit Schrauben festlegbaren Pleueldeckels einen Aufnahmeraum für einen Kurbelwellenhubzapfen begrenzt und an dem Pleueldeckel eine zur mechanischen Bearbeitung vorgesehene Tariermasse angeordnet ist und zwar derart, dass sich die Tariermasse weitgehend bis zu den Schrauben erstreckt und derart bearbeitet ist, dass der Pleueldeckel von der Pleueldeckelinnenseite zur Außenkontur der Tariermasse eine weitgehend gleichbleibende Wandstärke besitzt.

Diese Ausbildung ermöglicht das weitgehende Vermeiden von Steifigkeitssprüngen beim Übergang der Tariermasse zum Zuggurt und vom Zuggurt zu den Schraubenpfeifen hin, so dass sich im Belastungsfall der erfindungsgemäßen Pleuelstange eine deutlich homogenere Druckverteilung auf der Oberfläche der Pleuellagergleitschicht erzielen lässt, als dies bei der bekannten tarierbaren Pleuelstange mit eben bearbeiteter Aussenkontur der Tariermasse der Fall ist. Durch die erfindungsgemäße Ausbildung wird erreicht, dass der Steifigkeitsverlauf des Pleueldeckels von der Mitte bis zu den Schraubenpfeifen hinein so gleichmäßig wie möglich gestaltet ist und unvermeidbare Steifigkeitssprünge gering gehalten werden.

Das Hubzapfenlager der erfindungsgemäßen Pleuelstange kann damit kleiner ausgelegt werden, als dies bei den entsprechenden Lagern der bekannten Pleuelstangen der Fall ist, da die Druckverteilung in der Pleuellagergleitschicht gleichmäßiger ist, als dies bei den bekannten Pleuelstangen der Fall ist. Diese müssen nämlich so ausgelegt werden, dass die Pleuellagergleitschicht zum Vermeiden von örtlich hohem Verschleiß aufgrund unzulässig hoher Druckspannungsspitzen großflächig ist, womit die Sicherheit gegenüber Störungen in der Pleuellagerung erhöht werden soll.

Nach einer Ausbildung der Erfindung ist die Außenkontur der Tariermasse im Schnitt kreissegmentförmig ausgebildet, so dass der Kreismittelpunkt der Außenkontur der Tariermasse beispielsweise mit dem Mittelpunkt des großen Pleuelauges übereinstimmt.

Nach einer weiteren Ausführungsform kann die Außenkontur der Tariermasse auch einer Kreissegmentform angenähert ausgebildet sein, also beispielsweise treppenstufenförmig oder facettenförmig mit mindestens zwei Facetten. In beiden Fällen ergibt sich aufgrund der Erstreckung der bearbeiteten Tariermasse bis weitgehend zu den Schraubenpfeifen hin eine große Flächenausdehnung der Tariermasse, so dass die in Längsmittelachse der Pleuelstange betrachtete Höhe der Tariermasse klein gehalten werden kann und das zur Tarierung abzufräsende Volumen der Tariermasse über eine Bearbeitung der vollständigen Tariermassenfläche erreicht wird und somit im Gegensatz zu bekannten tarierbaren Pleuelstangen zwischen unterschiedlichen fertig bearbeiteten Pleuelstangen in Längsmittelachse der Pleuelstange betrachtet nur geringe Höhenunterschiede der Tariermasse bestehen.

Aufgrund der sich einer Kreisbahn annähernden Außenkontur der fertig bearbeiteten Tariermasse treten beim Übergang von der Tariermasse zum Zuggurt im Vergleich zu eben abgefrästen Tariermassen - wie dies beim bekannten Pleuel der Fall ist - nur sehr geringe Steifigkeitssprünge auf, so dass sich in der Pleuellagergleitschicht eine gleichmäßigere Druckverteilung einstellt.

Ein über den Pleueldeckel weitgehend konstanter Steifigkeitsverlauf kann dadurch erreicht werden, dass der Flächenmittelpunkt der Grundrissprojektion der Tariermasse mit der Längsmittelachse der Pleuelstange übereinstimmt und die Außenkontur der Tariermasse im Schnitt einem Kreissegment entspricht. Die Außenkontur der Tariermasse schmiegt sich bei der erfindungsgemäßen Pleuelstange der Außenkontur des Pleueldeckels an, so dass diese Ausbildung - verglichen mit der bekannten eben abgefrästen Tariermassenkontur - auch zu einem Gewichtsvorteil führt, da bei der erfindungsgemäßen Ausbildung keine ungenutzte Masse eingesetzt werden muss, um den Raum zwischen der ebenen Tariermassenaußenkontur und der runden Deckelkontur zu füllen.

Nach einer Weiterbildung der erfindungsgemäßen Pleuelstange ist zwischen der Tariermasse und den Schrauben ein Werkzeugfreigang vorgesehen, um ein Werkzeug zum Anziehen der Schrauben ansetzen zu können.

Die Erfindung wird im Folgenden anhand der Zeichnungen näher erläutert. Diese zeigt in:
Fig. 1 eine Draufsichtansicht auf eine tarierbare Pleuelstange nach der vorliegenden Erfindung; und
Fig. 2 eine perspektivische Teilansicht auf das geteilte große Pleuelauge mit Pleueldeckel und Tariermasse.

Die Pleuelstange 1 weist ein kleines Pleuelauge 2 zur Aufnahme eines nicht dargestellten Kolbenbolzens, einen Pleuelschaft 3 und ein großes Pleuelauge 4 zur Aufnahme eines Hubzapfens einer nicht näher dargestellten Kurbelwelle auf. Das große Pleuelauge 4 wird dabei vom Pleuelschaft 3 und einem Pleueldeckel 5 gebildet, der mittels Schrauben 6 an dem Pleuelschaft 3 festgelegt werden kann.

Im Bereich zwischen den beiden Schrauben 6 ist eine, der besseren Darstellung halber, schraffierte Tariermasse 7 vorgesehen, die bei der dargestellten Ausführungsform eine Außenkontur aufweist, die im Schnitt einem Kreissegment entspricht. Die Tariermasse 7 erstreckt sich dabei bis weitgehend zu den Schrauben 6 bis in den Bereich eines Werkzeugfreigangs 8, der freigehalten wird, um ein nicht näher dargestelltes Werkzeug zum Festziehen der Schrauben 6 mit diesen in Eingriff bringen zu können.

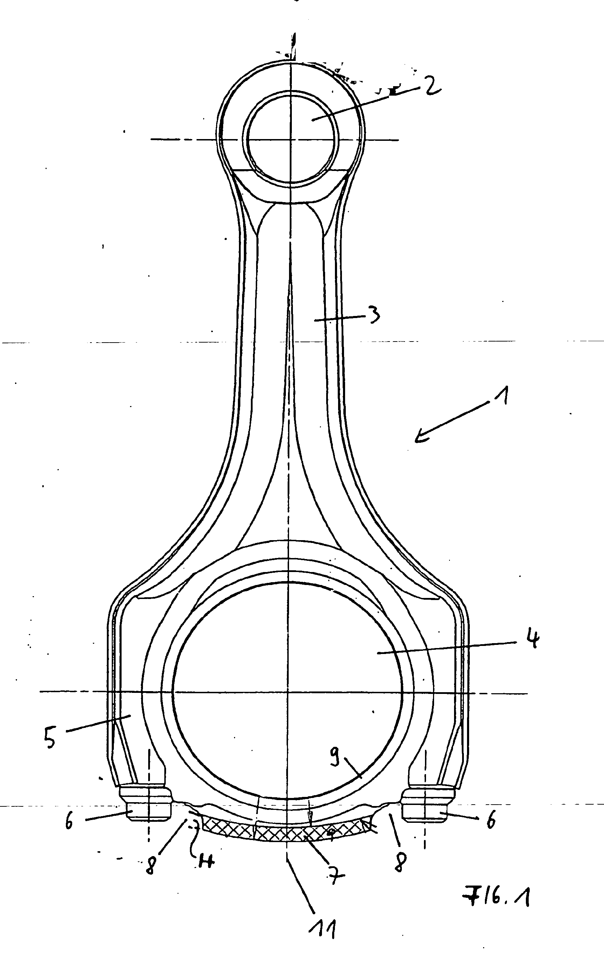

Wie es sich ohne weiteres anhand von Fig. 1 der Zeichnung ergibt, ist die Tariermasse derart bearbeitet worden, dass sie im Schnitt eine kreissegmentförmige Außenkontur aufweist und sich die Mittelachse der kreissegmentförmigen Außenkontur mit der Mittelachse des großen Pleuelauges 4 deckt. Im Gegensatz zu der erfindungsgemäßen Ausbildung der tarierbaren Pleuelstange weist eine bekannte tarierbare Pleuelstange eine eben abgefräste Tariermassenaußenkontur auf, so dass sich über dem Pleueldeckel Steifigkeitssprünge einstellen, die zu starken Druckspitzen in der Druckverteilung der Pleuellagergleitschicht 9 führen.

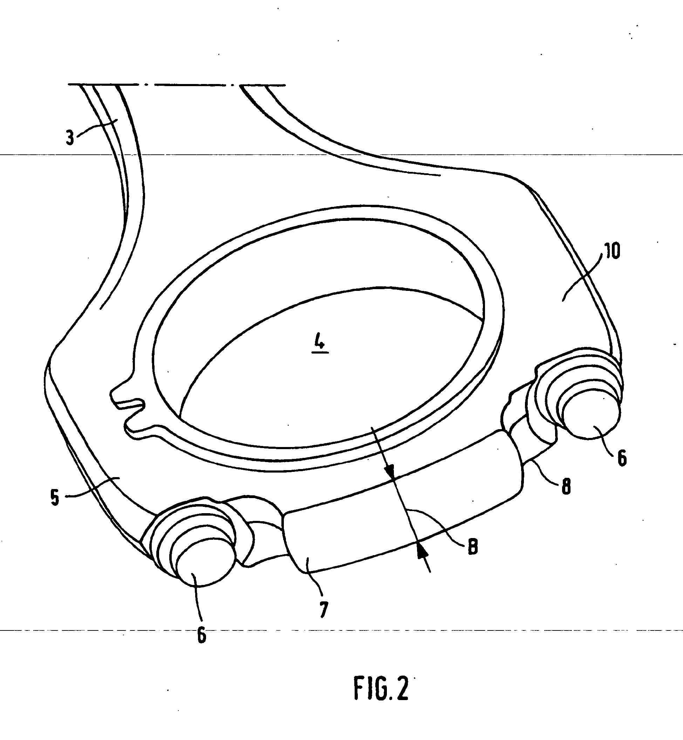

Fig. 2 zeigt eine perspektivische Ansicht eines Teils der erfindungsgemäßen tarierbaren Pleuelstange mit dem Pleuelschaft 3, dem großen Pleuelauge 4, dem Pleueldeckel 5, den Schrauben 6, der Tariermasse 7, Werkzeugfreigängen 8 und den am Pleueldeckel 5 angeordneten sogenannten Schraubenpfeifen 10, die der Aufnahme der Schrauben 6 dienen.

Wie es ohne weiteres ersichtlich ist, erstreckt sich die in der Außenkontur im Schnitt weitgehend kreissegmentförmige Tariermasse 7 spiegelsymmetrisch zur Längsmittelachse 11 (siehe Fig. 1) der Pleuelstange 1 bis zu den Werkzeugfreigängen 8 hin und zwar über die gesamte Breite B des Pleueldeckels 5 im Bereich der Tariermasse 7.

Diese Schilderung macht es deutlich, dass die Flächenausdehnung der Tariermasse 7 so groß wie möglich gewählt wurde und sich die Höhe H (siehe Fig. 1) der bearbeiteten Tariermasse baugleicher Pleuelstangen nur sehr gering voneinander unterscheidet. Das zur Tarierung der Pleuelstangen abzufräsende Volumen wird also über eine Bearbeitung der Tariermasse über ihre gesamte Flächenausdehnung erreicht. Da sich die Tariermasse 7 an die Außenkontur des Pleueldeckels 5 anschmiegt, verlaufen aufgrund der Werkzeugfreigänge 8 vorliegende Steifigkeitssprünge über dem Pleueldeckel deutlich weniger ausgeprägt, als dies bei einer bekannten Pleuelstange mit eben abgefräster Tariermasse der Fall ist. In diesem Übergangsbereich von der Tariermasse 7 zum Zuggurt im Bereich der Werkzeugfreigänge 8 weist daher die erfindungsgemäße Pleuelstange einen deutlich gleichmäßigeren Steifigkeitsverlauf auf, als dies bei der bekannten Pleuelstange der Fall ist.

Dies führt dazu, dass sich in der Pleuellagergleitschicht 9 eine deutlich gleichmäßigere Druckverteilung einstellt, als dies in der Pleuellagergleitschicht der bekannten Pleuelstange der Fall ist. Obwohl in der Zeichnung lediglich eine Ausbildung der Außenkontur der Tariermasse in der Form einer im Schnitt kreissegmentförmigen Tariermasse dargestellt wurde, ist es auch möglich, die Tariermasse beispielsweise treppenstufenförmig oder facettenartig auszubilden, so dass sich diese Kontur einer Kreisbahn nähert und es damit ebenfalls zu einem deutlich gleichmäßigeren Steifigkeitsverlauf des Pleueldeckels 5 im Bereich der Tariermasse 7 kommt.

## Patentansprüche

1. Tarierbare Pleuelstange (1) für insbesondere Brennkraftmaschinen, mit einem kleinen Pleuelauge (2), einem Pleuelschaft (3) und einem geteilten großen Pleuelauge (4), das mittels eines mit Schrauben (6) festlegbaren Pleueldeckels (5) einen Aufnahmeraum für einen Kurbelwellenhubzapfen begrenzt und am Pleueldeckel (5) eine zur mechanischen Bearbeitung vorgesehene Tariermasse (7) angeordnet ist, **dadurch gekennzeichnet, dass** sich die Tariermasse (7) weitgehend bis zu den Schrauben (6) erstreckt und derart bearbeitet ist, dass der Pleueldeckel (5) von der Pleueldeckelinnenseite zur Außenkontur der Tariermasse (7) eine weitgehend gleichbleibende Wandstärke besitzt.

2. Tarierbare Pleuelstange nach Anspruch 1, **dadurch gekennzeichnet, dass** die Außenkontur der Tariermasse (8) im Schnitt einem Kreissegment entspricht.

3. Tarierbare Pleuelstange nach Anspruch 1, **dadurch gekennzeichnet, dass** die Außenkontur der Tariermasse (7) treppenstufenförmig verläuft.

4. Tarierbare Pleuelstange nach Anspruch 2 oder 3, **dadurch gekennzeichnet, dass** die Tariermasse (7) zur Pleueltarierung über weitgehend die gesamte Breite zwischen den Schrauben (6) bearbeitet ist.

5. Tarierbare Pleuelstange nach einem der Ansprüche 1 bis 4, **dadurch gekennzeichnet, dass** der Flächenmittelpunkt der Grundrissprojektion der Tariermasse (7) mit der Längsmittelachse (11) der Pleuelstange übereinstimmt.

6. Tarierbare Pleuelstange nach einem der Ansprüche 1 bis 5, **dadurch gekennzeichnet, dass** zwischen der Tariermasse (7) und den Schrauben (6) ein Werkzeugfreigang (8) vorgesehen ist.

## Claims

1. A calibrateable connecting rod (1), especially for internal combustion engines, comprising a small eye (2), a shank (3) and a large divided eye (4) which, via a lid (5) fastened with screws (6), bounds a chamber for receiving a crankpin, and a calibration weight (7) provided for machining is disposed on the lid (5), **characterised in that** the calibration weight (7) extends substantially up to the screws (6) and is machined so that the lid (5) has a substantially constant wall thickness from the inside of the lid to the outer contour of the calibration weight (7).

2. A calibrateable connecting rod according to claim 1, **characterised in that** the outer contour of the weight (8) has a circular segmental cross-section.

3. A calibrateable connecting rod according to claim 1, **characterised in that** the outer contour of the weight (7) is stepped.

4. A calibrateable connecting rod according to claim 2 or claim 3, **characterised in that** the weight (7) for calibrating the connecting rod is machined over substantially the entire width between the screws (6).

5. A calibrateable connecting rod according to any of claims 1 to 4, **characterised in that** the centroid of the projection in plan view of the calibration weight (7) coincides with the longitudinal axis (11) of the connecting rod.

6. A calibrateable connecting rod according to any of claims 1 to 5, **characterised in that** a passage for tools (8) is provided between the calibration weight (7) and the screws (6).

## Revendications

1. Bielle (1) susceptible d'être tarée, notamment pour des moteurs à combustion interne comportant une tête de bielle (2), un corps de bielle (3) et un pied de bielle (4), divisé, délimitant avec un chapeau de bielle (5) fixé par des vis (6), une cavité pour recevoir un tourillon de vilebrequin et le chapeau (5) comporte une masse de tarage (7) prévue pour être usinée mécaniquement,
**caractérisée en ce que**
la masse de tarage (7) s'étend pratiquement jusque vers les vis (6) et elle est usinée pour que le chapeau de bielle (5) possède une épaisseur de paroi très largement constante en partant du côté intérieur du chapeau de bielle vers le côté extérieur de la masse de tarage (7).

2. Bielle susceptible d'être tarée, selon la revendication 1,
**caractérisée en ce que**
le contour extérieur de la masse de tarage (8) correspond en coupe à un segment de cercle.

3. Bielle susceptible d'être tarée, selon la revendication 1,
**caractérisée en ce que**
le contour extérieur de la masse de tarage (7) a une forme en gradins.

4. Bielle susceptible d'être tarée, selon les revendications 2 ou 3,
**caractérisée en ce que**
la masse de tarage (7) est usinée très largement sur toute la largeur entre les vis (6) pour tarer la bielle.

5. Bielle susceptible d'être tarée, selon l'une des revendications 1 à 4,
**caractérisée en ce que**
le centre de la surface de la projection de la masse de tarage (7) correspond au plan médian longitudinal (11) de la bielle.

6. Bielle susceptible d'être tarée, selon l'une des revendications 1 à 5,
**caractérisée par**
un dégagement d'outil (8) entre la masse de tarage (7) et les vis (6).
